# EUROPÄISCHE PATENTANMELDUNG

(11) **EP 1 031 832 A2**
(43) Veröffentlichungstag der Anmeldung: **30.08.2000**
(21) Anmeldenummer: 00102782.0
(22) Anmeldetag: 10.02.2000
(51) Int. Cl.: G01N 29/22

(54) **Sonde und Verfahren für die zerstörungsfreie Werkstoffprüfung**

(30) Priorität: 23.02.1999 DE 19907868
(71) Anmelder: SIEMENS AKTIENGESELLSCHAFT, 80333 München (DE)
(72) Erfinder: Achtzehn, Hans-Jurgen, 91325 Adelsdorf (DE); Meier-Hynek, konrad, 91074 Herzogenaurach (DE); Wiesinger, Wolfgang, 91074 Herzogenaurach (DE)

(57) **Zusammenfassung**

Es ist eine Vorrichtung für die zerstörungsfreie Werkstoffprüfung beschrieben, die einen längenstabilen und biegsamen Hüllschlauch (3) aufweist, in dem ein längenstabiler und biegsamer Schubschlauch (5) geführt ist, der an seinem über ein Ende (3A) des Hüllschlauchs (3) hinausragenden Ende (5A) einen Prüfkopf (7) trägt. Die Sande (1) zeichnet sich dadurch aus, daß der Schubschlauch (5) Zentrierelemente (41) aufweist, durch die er bezüglich des Hüllschlauchs (3) mittig geführt ist. Es ist auch ein Verfahren zur zerstörungsfreien Werkstoffprüfung eines Bauteils (51) beschrieben, das eine in einer Längsrichtung (53) ausgedehnte runde Mantelfläche (51A) aufweist. Bei dem Verfahren wird der Hüllschlauch (3) einer Sande (1) an das Bauteil (51) angesetzt, und der Prüfkopf (7) wird mittels des Schubschlauchs (5) entlang der Mantelfläche (51A) bewegt.

## Beschreibung

Die Erfindung liegt auf dem Gebiet der zerstörungsfreien Werkstoffprüfung.

Die Erfindung betrifft eine Sonde für die zerstörungsfreie Werkstoffprüfung, mit einem längenstabilen und biegsamen Hüllschlauch, in dem ein längenstabiler und biegsamer Schubschlauch geführt ist, der an seinem über ein Ende des Hüllschlauchs hinausragenden Ende einen Prüfkopf trägt. Die Erfindung bezieht sich ferner auf ein Verfahren zur zerstörungsfreien Werkstoffprüfung eines Bauteils, das eine in einer Längsrichtung ausgedehnte runde Mantelfläche, insbesondere eine kreisrunde Innen- oder Außenmantelfläche, aufweist.

Bei der zerstörungsfreien Prüfung eines Bauteils, beispielsweise bei der Prüfung eines Schraubenbolzens mit einer zentrischen Innenbohrung oder bei der Prüfung einer Welle, muß häufig ein Prüfkopf, der eine Ultraschall- oder Wirbelstrommeßeinheit trägt, entlang einer Mantelfläche geführt werden. Dabei müssen häufig nacheinander mehrere gleichartige Bauteile geprüft werden. Hierzu wurde in der Vergangenheit eine Sonde mit einem Hüllrohr positionsgenau an das Bauteil angesetzt, um mit einem aus dem Hüllrohr ausfahrbaren Schubschlauch, der endseitig einen Prüfkopf trägt, die Mantelfläche des Bauteils abzutasten. Die bislang benutzten Sonden weisen entweder ein starres geradliniges oder ein starres gekrümmtes Hüllrohr auf. Die bekannten Sonden sind deshalb nicht universell einsetzbar. Insbesondere war mit ihnen die Prüfung von schwer zugänglichen Stellen nicht möglich.

Zur Reinigung der Wärmetauscherrohre von Dampferzeugern ist aus den Deutschen Offenlegungsschriften DE 22 63 143, DE 33 16 461 A1 und DE 32 02 931 A1 bekannt, einen flexiblen Hüllschlauch zu verwenden, in dem ein biegsamer Schubschlauch geführt ist. Der Schubschlauch ist z.B. als Transportschlauch oder als Kabel aus gewickeltem Metall ausgebildet. Bei den bekannten Sonden, bei denen der Schubschlauch zum An- oder Vortrieb einer Inspektions- und/oder Reparatureinrichtung verwendet wird, ergibt sich das Problem, daß eine am Ende des Schubschlauchs angebrachte Inspektions- oder Reparatureinrichtung beim Einführen in nacheinander unterschiedliche Dampferzeugerrohre nur ungenau an jeweils der gleichen Position innerhalb des Dampferzeugerrohrs zu liegen kommt, weil sich der Schubschlauch innerhalb des Hüllschlauchs verwinden kann. Zudem hängt diese Verwindung vom momentanen Krümmungsradius des Hüllschlauchs ab, der bei jedem untersuchten Dampferzeugerrohr unterschiedlich ist, weil jedes Dampferzeugerrohr an lateral unterschiedlicher Position angeordnet ist. Mit anderen Worten: Die Reproduzierbarkeit der Positionsgenauigkeit ist für genaue Untersuchungen, insbesondere an anderen Bauteilen als an Dampferzeugerrohren, nicht ausreichend.

Der Erfindung liegt demzufolge die Aufgabe zugrunde, eine Sonde anzugeben, die universell und vielseitig einsetzbar ist und eine hohe Reproduzierbarkeit des Prüfkopfs in den untersuchten Bauteilen gewährleistet. Es ist gleichfalls Aufgabe der Erfindung, ein Verfahren zur zerstörungsfreien Werkstoffprüfung eines Bauteils anzugeben, mit dem die oben genannten Nachteile vermieden sind.

Die erstgenannte Aufgabe wird bezogen auf eine Sonde der eingangs genannten Art dadurch gelöst, daß der Schubschlauch Zentrierelemente aufweist, durch die er bezüglich des Hüllschlauchs mittig geführt ist.

Damit wird in vorteilhafter Weise erreicht, daß bei einem Schwenken, Verbiegen oder Krümmen des Hüllschlauchs mit dem in ihm geführten Schubschlauch eine Wegstrecke, die der Prüfkopf über das Ende des Hüllschlauchs hinausragt, nicht verändert wird. Dadurch ist vorteilig ein positionsstabiles Ansetzen der Sonde mit dem Hüllschlauch nacheinander an unterschiedliche zu untersuchende Bauteile, insbesondere an unterschiedlichen Stellen, verbunden mit unterschiedlichen Krümmungen des Hüllschlauchs, möglich. Mit anderen Worten: Falls bei einem Nacheinanderansetzen der Sonde an unterschiedliche Bauteile unterschiedliche Krümmungen des Hüllschlauchs auftreten, wirken sich diese Krümmungen nicht auf die Positionierung des Prüfkopts bezüglich der Bauteile aus.

Dadurch, daß nicht nur der Schubschlauch, sondern auch der Hüllschlauch biegsam ist, ist die Sonde auch an schwer zugänglichen Stellen einsetzbar.

Der Hüllschlauch ist derart ausgestaltet, daß er zwar biegsam aber trotzdem längenstabil ist. Beispielsweise weist der Hüllschlauch eine gerippte Wandung, insbesondere mit einer Wandstärke von weniger als 1 mm, auf. Der Hüllschlauch ist z.B. aus Polyurethan oder einem anderen Kunststoff gefertigt.

Vorzugsweise weist die Sonde eine Vorschubeinheit zum Längsantrieb des Schubschlauchs auf, die an dem vom Prüfkopf abgewandten Ende des Hüllschlauchs angeordnet ist.

Dadurch, daß der Hüllschlauch nicht nur biegsam, sondern auch längenstabil ist, kann er an das Bauteil angesetzt werden. Über den Hüllschlauch wird dabei die zum Vorschub des Schubschlauchs erforderliche Gegenkraft vom Bauteil auf die Vorschubeinheit übertragen. Mit anderen Worten: Bei an das Bauteil angesetztem Hüllschlauch steht die Vorschubeinheit mit dem Bauteil in einer kraftübertragenden Verbindung.

Bevorzugt ist der Schubschlauch torsionsstabil.

Nach einer besonders bevorzugten Ausgestaltung weist die Sonde eine Rotationseinheit zum Drehantrieb des Schubschlauchs auf, die an dem vom Prüfkopf abgewandten Ende des Hüllschlauchs angeordnet ist.

Bei dem Schubschlauch kann es sich um eine an sich bekannte Torsionswelle handeln.

Der Prüfkopf ist mit dem Schubschlauch vorzugsweise derart verbunden, daß der Prüfkopf mittels der Rotationseinheit drehbar ist.

Beispielsweise ist die Sonde mit dem Hüllschlauch nacheinander an die Stirnflächen unterschiedlicher Schraubenbolzen mit je einer zentrischen Bohrung ansetzbar. Soweit an der Vorschubeinheit keine Veränderungen vorgenommen werden, taucht der Prüfkopf beim Ansetzen an unterschiedliche Schraubenbolzen immer gleich tief in die zentrische Bohrung ein.

Vorzugsweise sind die Zentrierelemente als Gleitkörper ausgebildet.

Die Gleitkörper sind beispielsweise mit einer kugelschalenförmigen Seite der Innenmantelfläche des Hüllschlauchs zugewandt angebracht.

Der Hüllschlauch ist beispielsweise aus einem torsionssteifen Innenrohr und einer das Innenrohr umschließenden Stützummantelung gebildet. Diese Stützummantelung kann z.B. als Feder ausgebildet sein.

Die auf ein Verfahren bezogene Aufgabe wird gemäß der Erfindung bezogen auf das eingangs genannte Verfahren dadurch gelöst,
a) daß der Hüllschlauch einer Sonde nach der Erfindung mit seinem dem Prüfkopf zugewandten Ende an das Bauteil angesetzt wird, und
b) daß der Prüfkopf mittels des Schubschlauchs entlang der Mantelfläche bewegt wird.

Vorzugsweise wird dabei zwischen dem Bauteil und dem Hüllschlauch ein vom Schubschlauch durchdringbares Justierstück angesetzt.

Nach einer bevorzugten Ausgestaltung des Verfahrens wird die Mantelfläche mit dem Prüfkopf schraubenlinienförmig abgetastet. Die schraubenlinien- oder mäanderförmige Abtastung ist z.B. durch einen simultan stattfindenden Längsantrieb des Schubschlauchs mit Hilfe der Vorschubeinheit einerseits sowie einen Drehantrieb des Schubschlauchs mit Hilfe der Rotationseinheit andererseits einstellbar.

Zur Prüfung mehrerer Bauteile wird die Sonde beispielsweise nacheinander von Hand an die jeweils gleiche Stelle unterschiedlicher Bauteile angesetzt.

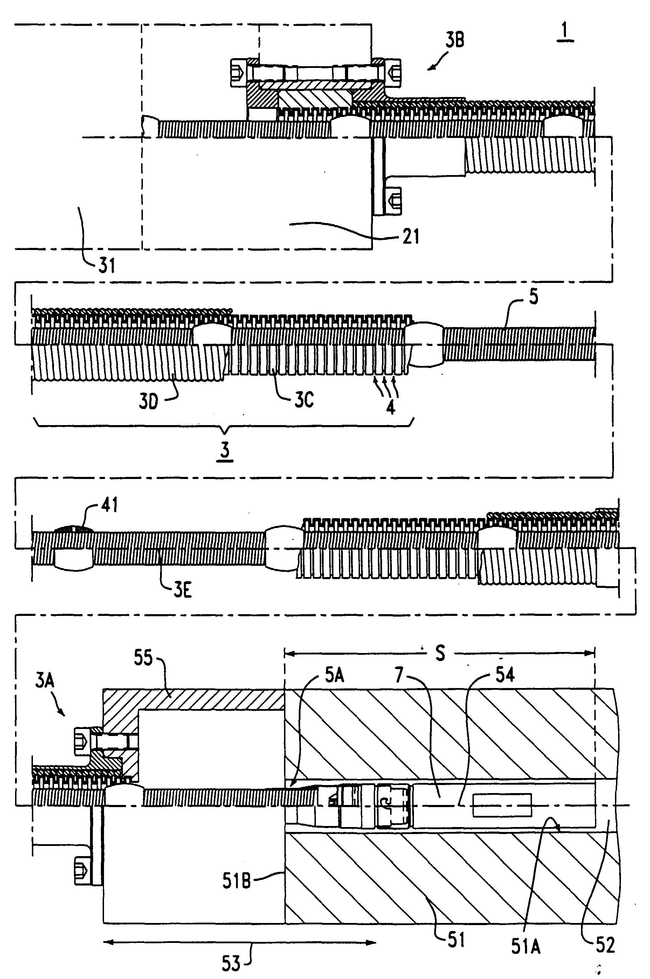

Ein Ausführungsbeispiel einer Sonde nach der Erfindung wird anhand der Zeichnung erläutert.

Die Zeichnung zeigt eine Sonde 1, mit einem Hüllschlauch 3, in dem ein längenstabiler und biegsamer Schubschlauch 5 geführt ist. Der Schubschlauch 5 trägt an seinem über ein Ende 3A des Hüllschlauchs 3 hinausragenden Ende 5A einen Prüfkopf 7 zur Ultraschall- und/oder Wirbelstromprüfung. Der Hüllschlauch 3 ist längenstabil und biegsam.

Der Hüllschlauch 3 weist ein flexibles und torsionssteifes Innenrohr 3C aus Polyurethan auf, das umfangsseitig in periodischen Abständen Vertiefungen 4 aufweist. Die Wand des Innenrohrs 3C ist also gerippt. Um ein seitliches Ausbrechen des Innenrohrs 3C zu vermeiden, ist dieses von einer Stützummantelung 3D umgeben, die als metallische Feder, insbesondere als Zugfeder, ausgebildet ist. Die Stützummantelung 3D liegt spaltfrei auf dem Innenrohr 3C auf.

An dem vom Prüfkopf 7 abgewandten Ende 3B des Hüllschlauchs 3 sind eine Vorschubeinheit 21 und eine Rotationseinheit 31 angebracht, die beide mit dem Schubschlauch 5 in Verbindung stehen und für seinen Längsantrieb bzw. Drehantrieb hergerichtet sind.

Der Schubschlauch 5 weist Zentrierelemente 41 auf, mit Hilfe derer er bezüglich des Hüllschlauchs 3 zentriert ist. Die Zentrierelemente 41 sind kugelschalenförmige Gleitkörper zum Gleiten an der Innenmantelfläche des Hüllschlauchs 3.

An dem dem Prütkopf 7 zugewandten Ende 3A des Hüllschlauchs 3 ist der Hüllschlauch 3 an ein Bauteil 51 angesetzt. Bei dem Bauteil 51 handelt es sich um einen zylindrischen Schraubenbolzen mit einer zentrischen Bohrung 52.

Der Prüfkopf 7 ist mittels der Vorschubeinheit 21 entlang einer Längsrichtung in die Bohrung 52 einführbar, so daß eine innere Mantelfläche 51A des Bauteils 51 von dem Prüfkopf 7 abtastbar ist. Um eine vollständige Umfangslinie der Innenmantelfläche 51A abzutasten, ist der Prüfkopf 7 zudem mittels der Rotationseinheit 31 um eine Bauteilachse 54 drehbar. Durch Überlagerung des Vorschubs mit der Rotation ist eine schraubenlinienförmige Abtastung der Innenmantelfläche 51A möglich.

Zwischen dem Bauteil 51 und dem Hüllschlauch 3 ist ein vom Schubschlauch 5 durchdringbares Justierstück 55 angesetzt. Das Justierstück 55 ist mit dem Hüllschlauch 3 fest verbunden und liegt auf einer Stirnfläche 51B des Bauteils 51 auf.

Am vom Prüfkopf abgewandten Ende 3B des Hüllschlauchs 3 ist dieses mit der Vorschubeinheit 21 fest verbunden, so daß eine zur Bewegung des Prüfkopfs 7 entlang der Längsrichtung 53 erforderliche Gegenkraft vom Bauteil 51 über das Justierstück 55 und den Hüllschlauch 3 auf die Vorschubeinheit 21 übertragbar ist.

Bei einem nicht dargestellten Biegen des Hüllschlauchs 3 mit dem Schubschlauch 5 bleibt der Schubschlauch 5 mittig auf der Hüllschlauchachse 3E zentriert. Dabei drücken die Zentrierelemente 41 gegebenenfalls an die Innenmantelfläche des Hüllschlauchs 3. Ein insbesondere an diesen Stellen möglicherweise stattfindendes seitliches Ausknicken oder Ausbrechen des Innenrohrs 3C ist durch die Stützummantelung 3D sicher verhindert.

Durch die mittige Zentrierung des Schubschlauchs 5 in Verbindung mit der Stützummantelung 3D ist insgesamt in vorteilhafter Weise erreicht, daß auch bei dem angesprochenen Verbiegen des Hüllschlauchs 3 die Strecke S, die der Prüfkopf 7 über das Justierstück 55 hinausragt, unverändert bleibt. Dadurch ist erreicht, daß bei einem nacheinander erfolgenden Ansetzen der Sonde 1 an Stirnflächen 51B unterschiedlicher Bauteile 51 der Prüfkopf 7 immer an der gleichen Stelle bezüglich der Stirnflächen 51B positioniert wird, dabei natürlich vorausgesetzt, daß die Vorschubeinheit 21 zwischenzeitlich nicht betätigt wurde.

### Bezugszeichenliste

- 1: Sonde
- 3: Hüllschlauch
- 3A: prüfkopfseitiges Ende
- 3B: prüfkopfabgewandtes Ende
- 3C: torsionssteifes Innenrohr
- 3D: Stützummantelung
- 3E: Hüllrohrachse
- 4: Vertiefungen
- 5: Schubschlauch
- 5A: Ende
- 7: Prüfkopf
- 21: Vorschubeinheit
- 31: Rotationseinheit
- 41: Zentrierelemente
- 51: Bauteil
- 51A: Mantelfläche
- 51B: Stirnfläche
- 52: Bohrung
- 53: Längsrichtung
- 54: Bauteilachse
- 55: Justierstück
- S: Strecke

## Patentansprüche

1. Sonde (1) für die zerstörungsfreie Werkstoffprüfung, mit einem längenstabilen und biegsamen Hüllschlauch (3), in dem ein längenstabiler und biegsamer Schubschlauch (5) geführt ist, der an seinem über ein Ende (3A) des Hüllschlauchs (3) hinausragenden Ende (5A) einen Prüfkopf (7) trägt,
**dadurch gekennzeichnet,** daß der Schubschlauch (5) Zentrierelemente (41) aufweist, durch die er bezüglich des Hüllschlauchs (3) mittig geführt ist.

2. Sonde (1) nach Anspruch 1,
**gekennzeichnet durch** eine Vorschubeinheit (21) zum Längsantrieb des Schubschlauchs (5), die an dem vom Prüfkopf (7) abgewandten Ende (3B) des Hüllschlauchs (3) angeordnet ist.

3. Sonde (1) nach Anspruch 1 oder 2,
**dadurch gekennzeichnet,** daß der Schubschlauch (5) torsionsstabil ist.

4. Sonde (1) nach einem der Ansprüche 1 bis 3,
**gekennzeichnet durch** eine Rotationseinheit (31) zum Drehantrieb des Schubschlauchs (5), die an dem vom Prüfkopf (7) abgewandten Ende (3B) des Hüllschlauchs (3) angeordnet ist.

5. Sonde (1) nach Anspruch 4,
**dadurch gekennzeichnet**, daß der Prüfkopf (7) derart mit dem Schubschlauch (5) verbunden ist, daß der Prüfkopf (7) mittels der Rotationseinheit (31) drehbar ist.

6. Sonde (1) nach einem der Ansprüche 1 bis 5,
**dadurch gekennzeichnet,** daß die Zentrierelemente (41) als Gleitkörper ausgebildet sind.

7. Sonde (1) nach Anspruch 6,
**dadurch gekennzeichnet,** daß die Gleitkörper mit einer kugelschalenförmigen Seite der Innenmantelfläche des Hüllschlauchs (3) zugewandt angebracht sind.

8. Sonde (1) nach einem der Ansprüche 1 bis 7,
**dadurch gekennzeichnet,** daß der Hüllschlauch (3) aus einem torsionssteifen Innenrohr (3C) und einer das Innenrohr (3C) umschließenden Stützummantelung (3D) gebildet ist.

9. Sonde (1) nach Anspruch 8,
**dadurch gekennzeichnet**, daß die Stützummantelung (3D) als Feder ausgebildet ist.

10. Verfahren zur zerstörungsfreien Werkstoffprüfung eines Bauteils (51), das eine in einer Längsrichtung (53) ausgedehnte runde Mantelfläche (51A), insbesondere eine kreisrunde Innen- oder Außenmantelfläche, aufweist,
**dadurch gekennzeichnet**,
a) daß der Hüllschlauch (3) einer Sonde (1) nach einem der Ansprüche 1 bis 9 mit seinem dem Prüfkopf (7) zugewandten Ende (3A) an das Bauteil (51) angesetzt wird, und
b) daß der Prüfkopf (7) mittels des Schubschlauchs (5) entlang der Mantelfläche (51A) bewegt wird.

11. Verfahren nach Anspruch 10,
**dadurch gekennzeichnet**, daß zwischen dem Bauteil (51) und dem Hüllschlauch (3) ein vom Schubschlauch (5) durchdringbares Justierstück (55) angesetzt wird.

12. Verfahren nach Anspruch 10 oder 11,
**dadurch gekennzeichnet**, daß die Mantelfläche (51A) mit dem Prüfkopf (7) schraubenlinienförmig abgetastet wird.

13. Verfahren nach einem der Ansprüche 10 bis 12,
**dadurch gekennzeichnet**, daß zur Prüfung mehrerer Bauteile die Sonde nacheinander von Hand an die jeweils gleiche Stelle unterschiedlicher Bauteile angesetzt wird.
